# EUROPEAN PATENT SPECIFICATION

(11) **EP 1 668 937 B1**
(45) Date of publication and mention of the grant of the patent: **31.12.2008**
(21) Application number: 04744054.0
(22) Date of filing: 26.07.2004
(51) Int. Cl.: H04Q 7/32

(54) **METHOD, TERMINAL DEVICE AND SYSTEM FOR REMOTE INITIATION OF NETWORK APPLICATIONS WITHIN MOBILE COMMUNICATION ENVIRONMENT**
VERFAHREN, ENDGERÄT UND SYSTEM ZUR FERNEINLEITUNG VON NETZWERKANWENDUNGEN IN EINER MOBILKOMMUNIKATIONSUMGEBUNG
PROCEDE, TERMINAL, ET SYSTEME DE LANCEMENT A DISTANCE D'APPLICATIONS RESEAU DANS UN ENVIRONNEMENT DE COMMUNICATION MOBILE

(30) Priority: 29.09.2003 US 675931
(43) Date of publication of application: 14.06.2006
(73) Proprietor: Nokia Corporation, 02150 Espoo (FI)
(72) Inventor: KORPINEN, Jari, Tapio, FIN-02940 Espoo (FI)
(74) Representative: Becker Kurig Straus
(86) International application number: PCT/IB2004/002396
(87) International publication number: WO 2005/032182

(56) References cited:
- WO-A2-02/084947
- US-A1- 2002 032 751
- US-A1- 2002 116 450
- US-A1- 2003 101 246
- US-A1- 2003 139 193

## Description

### Technical Field

The present invention relates to methods, computer program products, terminal devices and a system allowing remote initiation of one or more applications that are especially executable on mobile terminal devices. In particular, the present invention relates to allowing a user remote initiation of network applications via a mobile communication connection, where the network applications are carried out on a mobile communication enabled remote terminal.

### Background Art

Mobile terminals enabled for mobile communications via public land mobile networks (PLMN) are still increasingly popular and the customers broadly accept each new generation of mobile terminals with new capabilities and features. This fact in combination with the rapid growth of hardware developments and the future provision of enhanced data rate throughput of new mobile standards drive the implementation of more complex and sophisticated applications.

Today usability of applications carried out on mobile terminals, which are capable of mobile communications via a public land mobile network, is more or less limited to applications operated as stand-alone applications or as client applications. The stand-alone applications carried out on mobile terminals may comprise typically electronic contact and address directory applications, electronic calendar applications, JAVA^{™} MID applications in a terminal device providing JAVA^{™} MID environment etc. The client applications include browser applications known for example in the field of Internet access with WEB and WAP browser applications, database applications for example to balance data between local storage and networked storage. The implementation of client applications is up to now the preferred solution to provide complex and sophisticated applications because complex, large-sized and processing power requiring routines are performed on a corresponding network server which is not subjected to the limitations of mobile terminals comprising among others processing power limitations, memory capacity limitations, power supply limitations etc.

Moreover, to request initiation of a remote application executable on a remote terminal, known methods require that a connection be already established between the initiator terminal device and the remote terminal device. Such is the case of remotely controlling a mobile terminal in a mobile communication system according to US 2003/0139193 A1.

As illustrated above, however, the above-enumerated limitations of mobile terminals are rapidly changing such that limitations regarding the processing power and memory capacity will be obviated very soon. Nevertheless, provisions that allow operation of two mobile communications enabled terminals in a client-server environment where the first one of the terminals acts as client and the second one acts as a server are fairly under-represented in the field of mobile communication solutions.

### Summary of the Invention

The present invention provides methods, computer program products, terminal devices and a system, which enhance usability of mobile communications enabled terminals in a server-client environment to overcome the deficiencies cited above and to add new features for inter-working of mobile communications enabled terminals with remote operation of mobile applications.

It is now provided a method of requesting remote initiation of a remote application, and a method of executing remote initiation of a requested application.

According to a second aspect, it is provided a terminal device, in particular a mobile communications enabled terminal device, which is capable of performing the method of requesting a remote initiation of a remote application.

According to a third aspect, it is provided a terminal device, in particular a mobile communications enabled terminal device, which is adapted to initiate an application in consequence to receiving a remote initiation.

In addition, a computer program product implementing each of the above methods is also provided, as well as a system comprising both of the above terminal devices.

In short illustration, the present invention primarily purposes methods that allow establishment of terminal end-to-end communication in a client/server environment comprising two terminals. One of the terminals employing the inventive methods is able to initiate remotely applications operated on the other terminal. Moreover the purposed inventive methods allow the conveyance of necessary information and instructions, comprising simply a telephone number and an extension sequence, without being charged by the communication provider when switching communications between the terminals.

The objects of the present invention are attained by the independent claims, in which independent claim 1 defines a method of requesting remote initiation, independent claim 10 defines a method of executing initiation on a remote initiation, claims 17 and 18 define computer program products for carrying out each of these methods, independent claims 19 and 22 define terminals adapted to carry out the aforementioned methods and independent claim 27 defines a system defined by the aforementioned terminals. Further embodiments of the invention are defined in the dependent claims.

According to an aspect of the invention, a method is provided for remote initiation of one or more remote applications to be carried out on a remote terminal. The method comprises dialing a first sequence identifying the remote subscriber and dialing at least one second sequence, wherein said at least one second sequence corresponds to an application identifier which is associated with said at least one remote application.

In one example embodiment of the present invention said first sequence corresponds to a subscriber number of said remote device and said first and said at least one second sequences are dialed to instruct said remote terminal device to initiate said at least one remote application.

In another example embodiment of the present invention, said first sequence and said at least one second sequence are forming an extended subscriber sequence.

To better visualize the present invention the method may be described exemplarity that an extended subscriber sequence (in the following the expressions 'subscriber sequence' and 'first sequence' are used synonymously) is dialed, preferably after it has been received from an input section, in order to instruct the remote terminal to initiate at least one remote application which is provided by the remote terminal device for initiation and which is executable on said remote terminal device. The extended subscriber sequence is composed of a subscriber number of the remote terminal and at least one subsequence (in the following the expressions 'sub-sequence' and 'second sequence' are used synonymously). A first subsequence corresponds to an application identifier which is associated with the at least one remote application to be remotely initiated. The dialing of the extended subscriber sequence causes a transmission of a call set-up request to the subscribed public land mobile network (PLMN). The call set-up request comprises at least the extended subscriber sequence as a 'called party sequence', on the basis of which the PLMN identifies the addressed remote terminal and routes the communication thereto.

In yet another example embodiment of the present invention said first sequence and said at least one second sequence are dialed separately. In this embodiment the subscriber number (i.e. the first sequence) and the second sequence are not necessarily sent together. For example the second sequence can be sent when the connection is already active.

According to an embodiment of the invention, dialing of the extended subscriber sequence causes a generation of a call set-up request and a transmission thereof to a public land mobile network (PLMN), into which the dialing terminal is currently subscribed. The call set-up request corresponds essentially to a conventional call set-up request and comprises at least a called party sequence, which allows the PLMN to identify the designated counterpart terminal and routing communications thereto. The called party sequence of the call set-up request includes the extended subscriber sequence.

According to an embodiment of the invention, the remote initiation of the at least one remote application allows establishment of a client/server environment.

According to an embodiment of the invention, a further one of the subsequences corresponds to a parameter sequence, which relates to the at least one remote application and which is to be passed on to the at least one application during or after initiation for being processed by the at least one remote application.

According to an embodiment of the invention, the extended subscriber sequence additionally may comprise a separator, i.e. a symbol defined as separator. The separator delimits and separates the subsequence, which corresponds to the subscriber number, from the other subsequences, respectively.

According to an embodiment of the invention, the subscriber number corresponds to a telephone number, which is assigned to the remote terminal device.

According to an embodiment of the invention, a communication connection is established in consequence of the dialing. The established communication connection allows transmission and reception of dial tone multiple frequency coded (DTMF-coded) sequences from and to the remote terminal, respectively.

According to an aspect of the invention, a method for initiation of one or more applications instructed remotely by an initiator terminal is provided. An indication is received, which informs about an incoming call initiated by the initiator terminal. The indication that may be designated as incoming call request comprises among others a called party sequence, which corresponds to a sequence, which has been dialed on the initiator terminal for initiating the indication, i.e. for initiating the transmission of the indication via the telephone network. At least one second sequence is received on the basis of which at least one application is identified to be initiated.

According to an embodiment of the invention, the at least one second sequence is received in conjunction with the indication preferably at the same time, i.e. particularly as a part of the indication and more particularly as a part of the called party sequence comprised by the incoming call request. Alternatively, the at least one second sequence may not be sent simultaneously with the called party sequence but separately. In case the at least one second sequence is sent with the called party sequence the called party sequence is examined as to whether the called party sequence corresponds to an extended subscriber sequence. In case the extended subscriber sequence is detected, at least the at least one second sequence is extracted from the called party sequence and at least one application is identified in accordance with the extracted at least one second sequence. On the other hand, it may be envisaged that the second sequence is sent separately from the called party sequence and at another time.

According to another embodiment of the invention, the incoming call request and the at least one second sequence are received separately, i.e. at different moments in time.

In an example embodiment of the present invention said at least one application is finally initiated/started.

According to an embodiment of the invention, the initiation of the at least one application allows establishment of a client/server environment with the initiator terminal.

According to an embodiment of the invention, the called party sequence comprises a subscriber number of a terminal being called. At least one of the at least one second sequences corresponds to an application identifier which is associated with the at least one remote application. According to an embodiment of the invention, the called party sequence additionally may comprise a separator, i.e. a symbol defined as separator. The separator allows to delimit and separate the different sequences that are allowed to be comprised by the called party sequence.

According to an embodiment of the invention, At least one of the at least one second sequences corresponds to a parameter sequence that relates to the at least one remote application. The parameter sequence is dedicated to be passed on to the at least one application during or after initiation. Further, the parameter sequence may be dedicated to be processed by the at least one application.

According to an embodiment of the invention, a communication connection is established in consequence to the receiving of the indication. The established communication connection allows transmission and reception of dial tone multiple frequency coded (DTMF-coded) sequences from and to the initiator terminal, respectively.

According to an aspect of the invention, a computer program product for executing a method for initiation of one or more applications is provided. The computer program product comprises program code sections for carrying out the steps of the method of an aforementioned embodiment of the invention, when the program is run on a computer, a terminal, a network device, a mobile terminal, a mobile communication enabled terminal or an application specific integrated circuit.

According to an aspect of the invention, a computer program product is provided, which comprises program code sections stored on a machine-readable medium for carrying out the steps of the method of an aforementioned embodiment of the invention, when the computer program product is run on a computer, a terminal, a network device, a mobile terminal, a mobile communication enabled terminal, or an application specific integrated circuit.

According to an aspect of the invention, a computer data signal embodied in a carrier wave and representing instructions is provided which when executed by a processor cause the steps of the method of an aforementioned embodiment of the invention to be carried out.

According to an aspect of the invention, a terminal capable of mobile communications is provided. The terminal comprises at least a dialing mechanism which is adapted to dial a first sequence and at least a second sequence in order to instruct a remote terminal to initiate at least one remote application, which is provided by the remote terminal and which is executable on the remote terminal. The first sequence is suitable for identification of the remote terminal and especially the first sequence comprises a subscriber number of the remote terminal. The at least one second sequence corresponds to an application identifier which is associated with the at least one remote application. The terminal comprises further a communication interface, which is adapted to and performs transmission of a call set-up request to a telephone network, to which the terminal is currently subscribed. The call set-up request is generated in consequence to the dialing operated by the dialing mechanism, wherein the call set-up request corresponds substantially to a conventional call set-up request. The present call set-up request comprises at least a called party sequence for identifying and routing purposes, wherein the called party sequence includes at least the first sequence.

In another example embodiment of he present invention said telephone network is a public land mobile network (PLMN).

According to an aspect of the invention, a terminal device capable of mobile communications is provided, which comprises at least a communication interface and an identification component.

The communication interface is adapted to receive an indication that informs about an incoming call initiated by the initiator terminal device. The communication interface is additionally adapted to receive at least one second sequence. The indication comprises at least a called party sequence that corresponds to a sequence that has been dialed on the initiator terminal, which has caused the received indication. The identification component is adapted to invoke at least one application, which is associated with the application identifier. It shall be envisaged that the indication and the at least one second sequence may be received either separately and independent from each other or alternatively in conjunction with each other via the communication interface.

According to an embodiment of the invention, the terminal device may further also comprise a examination component and preferably an extraction component: The examination component is adapted to determine whether the called party sequence comprises the at least one second sequence. This may be the case when the called party sequence comprises an extended subscriber sequence as described above formed by the first sequence that corresponds to for instance the subscriber number and the at least one second sequence. In case that this applies, the extraction component is adapted to obtain the at least one second sequence from the called party sequence. Alternatively the second sequence may be sent and received separately from the called party sequence, that means separate from the indication containing the called party sequence and particularly separate from the indication corresponding to a incoming call request.

In an example embodiment of the present invention said terminal device further comprises an initiation component for starting said at least one application. The initiation component is adapted to start/initiate the at least one application.

According to an aspect of the invention, an initiator terminal and a remote terminal are provided. The initiator terminal corresponds to the aforementioned terminal capable of mobile communications, which has implemented a dialing mechanism for dialing an extended subscriber sequence. The remote terminal device corresponds to the terminal capable of mobile communications, which has implemented among other an examination component, extraction component, and an identification component.

In an example embodiment of the present invention said initiator terminal device further comprises an initiation component for starting said at least one application. The initiation component is adapted to start/initiate the at least one application. The remote terminal device corresponds to the terminal capable of mobile communications, which has implemented among other an examination component, extraction component, an identification component and an initiation component, such that initiation of at least one application is carried out.

The initiator terminal can comprise a client to create an initiation component and send it to the network. The network transfers said initiation component to the remote terminal. The client waits "response" from the server. The server (at said remote terminal) shall discard or accept "session" by releasing a call (different cause code).

Still other objects and advantages of the present invention will become readily apparent to those skilled in the art from the following detailed description in which reference is made to embodiments of the invention simply by the way of illustration. As will be realized the invention is capable of other and different embodiments and its several details are capable of modification in various ways without departing from the scope of the invention that is only limited by the appended claims. The drawings and the description are to be regarded as illustrative in nature and not as restrictive.

### Brief Description of the Drawings

- Fig. 1: shows a block diagram illustrating an end-to-end communication connection between two terminal devices according to an embodiment of the invention;
- Fig. 2a: shows a first flow chart depicting an operational sequence according to an embodiment of the invention;
- Fig. 2b: shows a second flow chart depicting an operational sequence according to an embodiment of the invention; and
- Fig. 3a: shows a first flow chart depicting an operational sequence according to another embodiment of the invention;
- Fig. 3b: shows a second flow chart depicting an operational sequence according to another embodiment of the invention; and
- Fig. 4: shows a third flow chart depicting an operational sequence amending the operational sequence shown in Fig. 3a according to an embodiment of the invention.

### Detailed Description

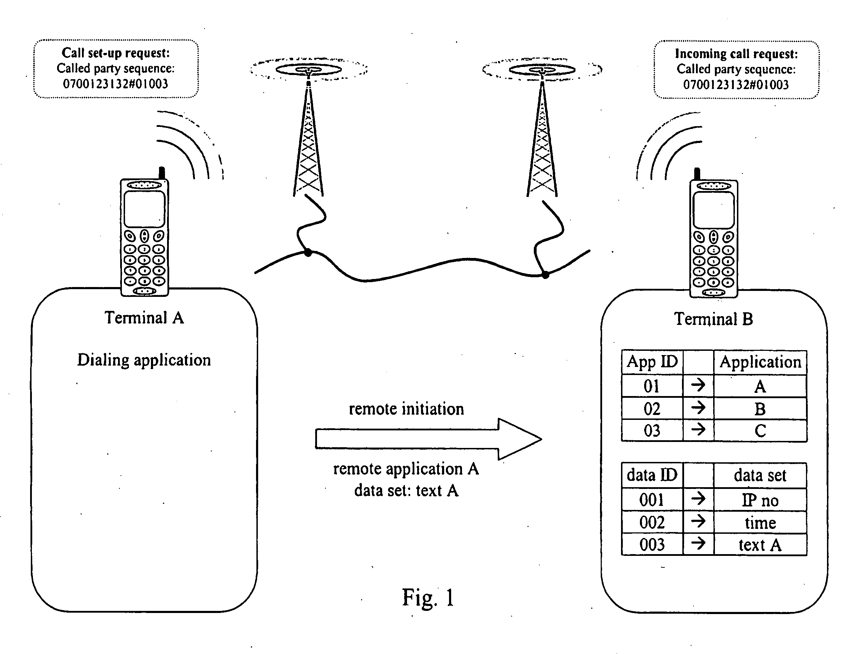

Referring to Fig. 1, a system comprising two mobile communications enabled terminals A and B is presented in a simplified illustrative mobile communication environment. In accordance with the inventive idea, on which the present invention is based, depicted terminals A and B are capable of establishing a communication connection between each other via the illustrated public land mobile network and to inter-work in a server/client environment with each other according to an embodiment of the invention.

Conventionally when referring to mobile phones of cellular PLMN of the art as embodiments of the terminal A and B, for instance that a user wishes to establish a voice communication connection to another user, the user typically selects a telephone contact from an electronic contact directory/manager of its mobile phone or inputs a telephone number of the called party, i.e. the of other user, operable with a keypad of the mobile phone. Then, the mobile phone initiates a call set-up request procedure and transmits a call set-up request comprising among others the telephone number of the called party to appropriate network knots operated by the PLMN operator. The call set-up request is identified as such by the appropriate network knots and information about the request is routed through the network. Finally, the addressed mobile phone identified by the dialed telephone number of the called party receives an incoming call request that is part of an incoming call request procedure.

The incoming call request also comprises among others the telephone number of the called party. Now, the incoming call is indicated to the user of the called mobile phone by acoustic and visual signaling, i.e. by an acoustic alert and by displaying corresponding information on a display of the called mobile phone. As a result, the called user addressed by the telephone number is now allowed for accepting and denying an establishment of the requested communication connection, respectively. The telephone number of the called party will be denoted in the following also as called party sequence (cf. Fig. 1) and a correspondingly designated data field is comprised in the call set-up request as well as in the incoming call request of the respective aforementioned procedures. The phrase called party sequence will be understood more clearly when reading the following description regarding valid contents of the called party sequence which is not purely limited to exact telephone numbers. According to an embodiment of the invention, the called party sequence will be employed for coding additionally one or more instructions, which commands the called (addressed) mobile phone for remote initiation of a remote application.

It is understood by those skilled in the art that the introduction given with view onto the call set-up and incoming call request procedure are just rather illustrative although the introduction described in detail above utilizes phrases and designations, which are typically employed in the field of the global system for mobile communication (GSM) and universal mobile telecommunication system (UMTS). Detailed information about these illustrated procedures and similar procedures, respectively, designated to the similar operations, are part of all known PLMN standards and will be also part of future standards, such as Global System for Mobile Communication (GSM), Universal Mobile Telecommunications System (UMTS), Personal Communication System (PCS), Personal Digital Cellular (PDC) etc. The principles enlightened above apply to all these digital cellular communication systems. It is to be noted that the present invention is not limited to any of the systems named above in concrete terms.

Nevertheless, the brief introduction to the set-up of calls allows detailed description of the present invention on the basis of following embodiments. A basic purpose of the present invention is to allow remote initiation of one or more remote applications. At first the phrases "remote initiation" and "remote application" should be defined in the following such that the phrases are clearly understood in the context of the detailed description of the present invention. A remote initiation is to be appreciated as an initiation, a start etc. of one or more predefined applications that are executable on a remote terminal, where the initiation and start is instructed on a terminal, respectively, which is different from the remote terminal. These predefined applications provided for execution on a remote terminal are to be appreciated as remote applications. A remote initiation of a distinct remote application executable by the remote terminal is obtained by providing information about the initiation of the remote application, i.e. one or more instructions to initiate the remote application, which is conveyed from the initiator terminal to the addressed remote terminal.

Referring back to Fig. 1, terminal A should be assumed to be that terminal which represents as initiator for instructing a remote initiation. Further, terminal B should be assumed to be that terminal which represents the addressee of the remote initiation. Consequently, it shall be noted that in the following description terminal A is designated synonymously as initiator terminal and analogously, terminal B is designated synonymously as addressee terminal.

Therefore, the terminal B provides a selection of predefined remote applications executable on the terminal B and allowed for being started by remote initiation from terminal A. The selection of predefined remote applications comprises for illustrative issue applications A, B and C, respectively. In order to instruct the remote initiation of one of the remote applications the aforementioned conveyance of the telephone number of the called party during call set-up request and incoming call request procedures shall be employed, respectively. For this purpose, the telephone number or called party sequence provided by the terminal A for identifying terminal B as called party is modified and completed by one or more instructions for initiation, respectively.

In fact, a telephone number is used for identifying an addressee of a call when dialed and a call can be routed on the basis of that identification which is based on the telephone number. In practice, the telephone number as described herein is a sequence of symbols with the minimum number of symbols that is required for the aforementioned identification and routing purposes. In case additional legal symbols are appended to the symbol sequence that represents the telephone number to form an extended sequence, the identification and the routing are not affected thereby. Normally, but not limiting thereto, legal symbols for forming telephone numbers are 0 to 9, #, + and * or a subset thereof. The set of legal symbols allowed for coding a telephone number has conventionally to fulfil constraints defined in standards issued by the ITU (international telecommunication union).

The beginning of the extended sequence is used for identification and routing purposes during a call set-up request procedure, which allows unambiguous identification of the addressee. This sequence is actually the symbol sequence representing the telephone number. The symbols appended to the telephone number for forming the extended sequence remain unnoticed.

Furthermore, the extended sequence that is formed of the symbol sequence representing the telephone number and the appended sequence being the additional symbols, is comprised of the called party sequence of the aforementioned call set-up request. Independent from the fact that the first number sequence that represents the telephone number of the addressee (called party) is employed for identification and routing, respectively, the extended sequence is not shortened by any of the network knots being interposed in the communication connection between terminal A and terminal B and being responsible for identification and routing, respectively. Consequently, the extended sequence is unchangeably enclosed in the called party sequence of the aforementioned incoming call request, that is conveyed to terminal B via the public land mobile network (PLMN) the terminal B is subscribed to. In practice, the called party number, which is sent from terminal A should have the form of a symbol sequence that represents a client-server call.

The following operational sequences are given to more enlighten the procedure of the present invention with regard to example embodiments.

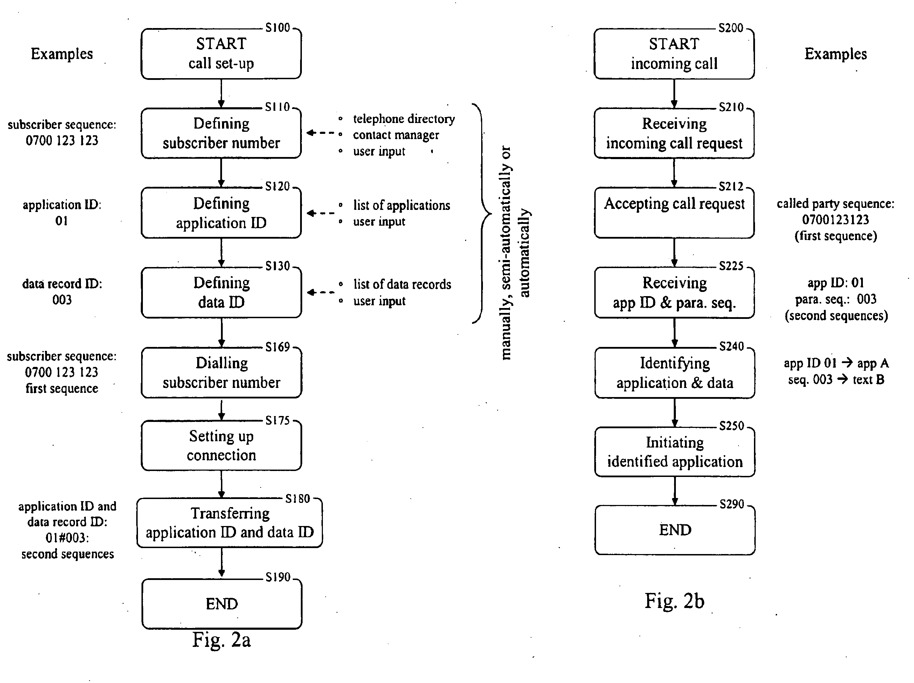

Referring to Fig. 2a, an operational sequence according to an embodiment of the invention is presented, which is to be carried out on terminal A, i.e. that terminal which is employed as an initiator of the remote initiation. Therefore, terminal A will be also indicated with a more common designation as an initiator terminal. The remote initiation relates to applications provided by terminal B and being executable by terminal B, i.e. that terminal which is addressed by the initiator terminal (here terminal A). For that reason, terminal B will be also denoted with a more common designation as addressee terminal.

In an operation S100, the modified call set-up procedure on the side of the initiator terminal A is started, i.e. the remote initiation procedure of one or more remote applications is started.

In the following operations a set of sequences will be defined stepwise. It shall be understood that the stepwise definition as presented is just illustrative and the invention is not limited thereto.

In an operation S 110, a subscriber number, i.e. the telephone number, is defined. According to an embodiment of the invention, the definition may be achieved by selecting a telephone number from a telephone directory or a contact manager, which may be both known in the field of mobile terminals, mobiles phones, organizers, personal digital assistants (PDA) etc. The telephone number may also be obtained from user input, which is for instance manually operable with the keypad of the initiator terminal. In accordance with the embodiment depicted in Fig. 2a a subscriber number "0700 123 123" may be assumed, without limiting thereto.

In an operation S120, an application identifier and application identification sequence is defined, respectively, which is associated with a predefined application. The definition may be achieved by selecting an application identifier from a set, a list, an array etc. of predefined application identifiers. Alternatively, the application identifier may be obtained from user input, which is for instance manually operable with a keypad of the initiator terminal.

The application identifier is an identification sequence comprised of symbols such that a coding of a plurality of application identifiers is possible such that each application identifier is associated with one (different) predefined application. The association of an application identifier with a correspondingly predefined assigned application should be unambiguous; that means that the association between application identifiers and predefined applications is at least unambiguous in the client/server environment constituted by the initiator terminal (i.e. terminal A) and the addressee terminal (i.e. terminal B). A set of predefined applications on the addressee terminal represents or at least comprises the aforementioned associated applications, wherein the set of predefined applications is in turn at least a part of the applications provided for execution on the addressee terminal. The application identifier is employed to define that application associated therewith, which shall be initiated and started on the addressee terminal by remote initiation performed on the initiator terminal. Regarding the presented embodiment of Fig. 2a, the application identifier may be "01", without being limited thereto. The application identifier "01" shall be assumed to be associated with an application A (app. A) provided for execution on the addressee terminal (i.e. terminal B).

In an operation S 130, an optional parameter sequence is defined. The definition may be achieved by selecting an optional parameter sequence from a set, a list, an array etc. of predefined parameter sequences. Alternatively, the optional parameter sequence may be obtained from user input, which is for instance manually operable with a keypad of the initiator terminal.

On the one hand, the parameter sequence may define a parameter identifier and a parameter identification sequence, respectively, which is to be understood analogously to that application identifier mentioned above. That means, the parameter identifier is an identification sequence comprised of symbols such that a coding of a plurality of parameter identifiers, each being associated with one or more predefined parameters, is possible. The association of a parameter identifier with one or more correspondingly predefined assigned parameters should be unambiguous; which means that the association between parameter identifiers and predefined parameters is at least unambiguous in the client/server environment constituted by the initiator terminal (i.e. terminal A) and the addressee terminal (i.e. terminal B). The parameter identifier is employed to define those parameters associated therewith, which shall be passed on to the initiated and started application executed on the addressee terminal in consequence upon the remote initiation performed on the initiator terminal. With reference to the embodiment shown in Fig. 2a the optional parameter sequence is "003" and shall be assigned with a predefined data record including text information, without limiting the invention thereto.

On the other hand, the optional parameter sequence allows alternatively directly coding one or more parameters. The coding of the one or more parameters is based on the set of legal symbols that will be described in detail below.

It shall be understood that the parameter sequence is not limited to both embodiments of the parameter sequence as described above. Moreover, the term "parameter" shall be understood as broad as possible, which means that the wording "parameter" shall cover for example information, data, set of data, data record, compilation of data etc. without limiting the present invention thereto.

Both the application identifier (i.e. application identification sequence, the second sequence in the claims) and the parameter sequence (which may represent a parameter identifier or which may code directly a parameter, another second sequence in the claims) are coded as sequences or a basis of set of legal symbols. In figure 2a these sequences are not to be appended to the subscriber sequence (i.e. the telephone number of the addressee terminal and terminal B, respectively, the first sequence in the claims) to form an extended (subscriber) sequence.

In Figure 2a there is illustrated a subscriber sequence which is provided for dialing purpose.

The application identifier and the parameter sequence can be composed from the same symbols as the subscriber sequence. As a result, the set of symbols, which are legal for coding these sequences, can underlie the same constraints that are defined for coding subscriber numbers and telephone numbers, respectively. Normally, the legal set of symbols for defining a subscriber number comprises the symbols "0" to "9", "*" and "#". Actually the called party number comprises 'BCD' characters, i.e. 'binary coded decimals' and therefore the called party number can contain 2⁴=16 characters from '0' to 'F'. But actually the standard ITU-T keyboard usually used for entering said sequences is limited to the well known 12 (twelve) characters 0-9, # and *.

In an operation S169, the subscriber sequence is dialed and a connection is set up S175 to a device said subscriber sequence is allocated to.

The application identifier and the optional parameter sequence are combined to form an application start sequence in that sense mentioned above. A delimiter or separator may be interposed into the application start sequence between the application identification and the application number and the optional parameter sequence, such that a delimitation of the dialing related subscriber number and the remote application related application identifier and the optional parameter sequence is introduced in the extended (subscriber) sequence. According to the embodiment illustrated in Fig. 2a, a hash-symbol "#" may be used as delimiter/separator, such that the application start sequence is based on the examples given with reference to operations S120 and S130 results to "01#003". Alternatively, when omitting the delimiter/separator the final application start sequence may become "01003".

In an operation S180, the application start sequence is used in the manner of a conventional subscriber number. That means, the application start sequence is provided to a dialing mechanism of the initiator terminal (i.e. terminal A) to be used in the kind of a conventional dialing code to transfer the application ID and the data ID to the addressee terminal (i.e. terminal B) via the connection, which is set up in operation S175.

As explained, the subscriber sequence is comprised of the field of call set-up request, which is dedicated to contain the called party sequence. In accordance with the call set-up request procedure, which is initiated by the dialing mechanism of the initiator terminal, this call set-up request is transmitted to the network knots of the corresponding public land mobile network (PLMN), in which the initiator terminal is subscribed. On the basis of this call set-up request, identification of the addressee terminal and routing to the addressee terminal are performed, respectively.

In an operation S190, the modified call set-up procedure according to an embodiment of the present invention is finished.

The operations S110 and S120 to S130 have been embodied as separate operations, each dedicated to a certain definition operation of a sub-sequence of the resulting the subscriber sequence and the application start sequence can be performed stepwise. It is understood by those skilled in the art that this specific embodiment of the definition operations is just one of several equal embodiments. In a more user-friendly or sophisticated manner, at least some of the sequences required for remote initiation procedure according to the present invention may be predefined such that the definition operations are performed in a semi-automatic way. Moreover, the definition operations may be performed in an automatic way, for instance the required subscriber sequence and the application start sequence may be completely predefined or in case the application start sequence may be combined automatically by a dedicated application operable with the initiator terminal. Consequently, the automatic remote initiation procedure may have to be only started by a user while the required definitions are predefined or automatically appended.

Referring to Fig. 2b, an operational sequence according to an embodiment of the invention is presented, which is to be carried out at terminal B, i.e. that terminal, which is addressee of the remote initiation of the procedure that has being described with respect to Fig. 2a according to an embodiment of the invention.

In an operation S200, the incoming call procedure on side of the addressee terminal (i.e. terminal B) is started; i.e. the initiation procedure of one or more applications in consequence of a remote initiation is started.

In an operation S210, the addressee terminal (i.e. terminal B) receives an incoming call request in consequence of the call set-up request described in detail with reference to Fig. 2a. The incoming call request procedure of which the incoming call request is part does not differ from an incoming call request procedure in consequence of a conventional call set-up request for establishing a voice communication connection.

As mentioned, the incoming call request comprises a field which is dedicated to contain the called party sequence which is in fact the sequence that is dialed by the initiator and originator (i.e. here the initiator terminal A), respectively, which causes the occurring of the incoming call request. According to the current described embodiment and with respect to the embodiment of Fig. 2a, the called party sequence field comprised in the incoming call request just contains the sequence "0700123123" (cf. operation S169 of Fig. 2a).

The addressee terminal knows about its "own" assigned subscriber number, which may simply be the telephone number assigned by the public land mobile network (PLMN) provider to the addressee terminal. For the way of illustration the subscriber number is "0700123123" with reference back to the example. On basis of this knowledge the decision can be issued, which results in an identification of a conventional subscriber number and an identification of an extended (subscriber) number in the gist of the present invention.

In operation S212, the incoming call request is accepted. An automatic call acceptor, such as e.g. an internal mailbox may perform this acceptation.

In an operation S225, in case of a successful acceptation of the cell the application identifier and if present the optional parameter sequence are received (at the terminal B).

In accordance with the embodiment depicted in Fig. 2b the received application identifier is "01" an the received parameter sequence is "003", which correspond to the defined sequences shown illustratively in Fig. 2a.

In an operation S240, according to the identified application identifier, the correspondingly associated remote application provided by and operable with the addressee terminal is identified. Analogously, the optional identified parameter sequence which may represent a parameter identifier may be also employed for identifying a correspondingly associated information, data set, data record etc. provided by the addressee terminal and to be passed to the identified remote application for being processed thereby when the identified remote application is executed. Alternatively, the parameter sequence may be decoded to extract directly one or more parameters therefrom.

The association of the application identifier with executable remote applications may be obtained by analyzing and evaluating a table, an array, etc. which comprises predefined associations of identifiers and applications.

In an operation S250, the identified remote application is initiated and started on the addressee terminal (i.e. terminal B), respectively. In case of one or more optional parameters, which may be directly decoded from the optional parameter sequence or which may be obtained from an optional parameter identifier which identifies one or more parameters associated therewith, are passed on to the initiated remote application.

The initiation of the remote application in accordance with an embodiment of the present invention may be performed automatically or may performed alternatively on user confirmation, which comprises an inquiry for the request for remote initiation, such that the user may confirm the initiation. The inquiry procedure ensures that the user of the addressee terminal has still control over its terminal such that an unwanted operation of the terminal does not occur.

In an operation S290, the modified incoming call procedure on side of the addressee terminal is finished.

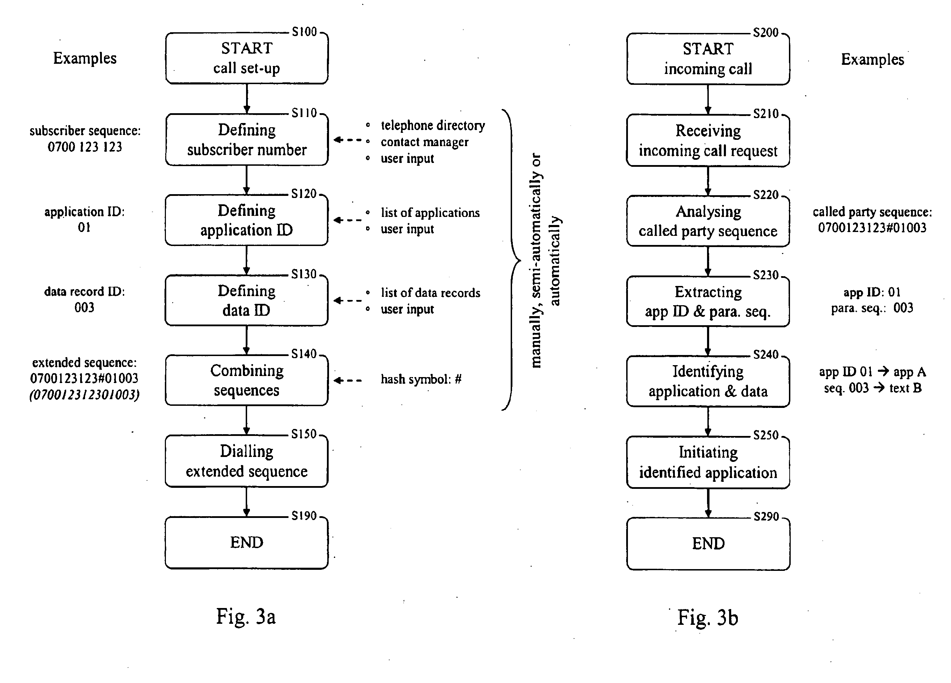

Referring to Fig. 3a, an operational sequence according to another embodiment of the invention is presented, which is to be carried out on terminal A, i.e. that terminal which is employed as an initiator of the remote initiation. Therefore, terminal A will be also indicated with a more common designation as an initiator terminal. The remote initiation relates to applications provided by terminal B and being executable by terminal B, i.e. that terminal which is addressed by the initiator terminal (here terminal A). For that reason, terminal B will be also denoted with a more common designation as addressee terminal.

In an operation S100, the modified call set-up procedure on side of the initiator terminal A is started, i.e. the remote initiation procedure of one or more remote applications is started.

In the following operations a set of sequences will be defined stepwise. It shall be understood that the stepwise definition as presented is just illustrative and the invention is not limited thereto.

In an operation S110, a subscriber number, i.e. the telephone number, is defined. According to an embodiment of the invention, the definition may be achieved by selecting a telephone number from a telephone directory or a contact manager, which may be both known in the field of mobile terminals, mobiles phones, organizers, personal digital assistants (PDA) etc. The telephone number may also be obtained from user input, which is for instance manually operable with the keypad of the initiator terminal. In accordance with the embodiment depicted in Fig. 3a a subscriber number "0700 123 123" may be assumed, without limiting thereto.

In an operation S120, an application identifier and application identification sequence is defined, respectively, which is associated with a predefined application. The definition may be achieved by selecting an application identifier from a set, a list, an array etc. of predefined application identifiers. Alternatively, the application identifier may be obtained from user input, which is for instance manually operable with a keypad of the initiator terminal.

The application identifier is an identification sequence comprised of symbols such that a coding of a plurality of application identifiers is possible such that each application identifier is associated with one (different) predefined application. The association of an application identifier with a correspondingly predefined assigned application should be unambiguous; that means that the association between application identifiers and predefined applications is at least unambiguous in the client/server environment constituted by the initiator terminal (i.e. terminal A) and the addressee terminal (i.e. terminal B). A set of predefined applications on the addressee terminal represents or at least comprises the aforementioned associated applications, where the set of predefined applications is in turn at least a part of the applications provided for execution on the addressee terminal. The application identifier is employed to define that application associated therewith, which shall be initiated and started on the addressee terminal by remote initiation performed on the initiator terminal. Regarding the presented embodiment of Fig. 3a, the application identifier may be "01", without being limited thereto. The application identifier "01" shall be assumed to be associated with an application A (app. A) provided for execution on the addressee terminal (i.e. terminal B).

In an operation S130, an optional parameter sequence is defined. The definition may be achieved by selecting an optional parameter sequence from a set, a list, an array etc. of predefined parameter sequences. Alternatively, the optional parameter sequence may be obtained from user input, which is for instance manually operable with a keypad of the initiator terminal.

On the one hand, the parameter sequence may define a parameter identifier and a parameter identification sequence, respectively, which is to be understood analogously to that application identifier mentioned above. That means, the parameter identifier is an identification sequence comprised of symbols such that a coding of a plurality of parameter identifiers, each being associated with one or more predefined parameters, is possible. The association of an parameter identifier with one or more correspondingly predefined assigned parameters should be unambiguous; that means that the association between parameter identifiers and predefined parameters is at least unambiguous in the client/server environment constituted by the initiator terminal (i.e. terminal A) and the addressee terminal (i.e. terminal B). The parameter identifier is employed to define those parameters associated therewith, which shall be passed on to the initiated and started application executed on the addressee terminal in consequence on the remote initiation performed on the initiator terminal. With reference to the embodiment shown in Fig. 3a the optional parameter sequence is "003" and shall be assigned with a predefined data record including text information, without limiting the invention thereto.

On the other hand, the optional parameter sequence allows alternatively directly coding one or more parameters. The coding of the one or more parameters is based on the set of legal symbols that will be described in detail below.

It shall be understood that the parameter sequence is not limited to the both embodiments of the parameter sequence as described above. Moreover, the phrase parameter shall be understood as broad as possible, that means that the wording parameter shall cover for example information, data, set of data, data record, compilation of data etc. without limiting the present invention thereto.

Both the application identifier (i.e. application identification sequence) and the parameter sequence (which may represent a parameter identifier or which may code directly a parameter) are coded as sequences on a basis of set of legal symbols. These sequences are to be appended to the subscriber sequence (i.e. the telephone number of the addressee terminal and terminal B, respectively) to form an extended (subscriber) sequence which is finally provided for dialing purpose. As a result, the set of symbols, which are legal for coding these sequences, underlies the same constraints that are defined for coding subscriber numbers and telephone numbers, respectively. Normally, the legal set of symbols for defining a subscriber number comprises the symbols "0" to "9", "*" and "#". In particular in GSM networks but also in other cellular land mobile networks (PLMN), there is also allowed to use the symbol "+", which enables substitution of the international access dialing code, which is for example in Germany and several other countries a leading "00".

Actually the called party number comprises 'BCD' characters, i.e. 'binary coded decimals' and therefore the called party number can contain 2⁴ = 16 characters from '0' to `F'. But actually the standard ITU-T keyboard is limited to the well known 12 twelve characters 0-9, # and *.

In an operation S140, the obtained sequences, i.e. the subscriber number, the application identifier and the optional parameter sequence are combined to form an extended (subscriber) sequence in that sense mentioned above. A delimiter or separator may be interposed into the extended (subscriber) sequence between the subscriber number (telephone number) and the application identification and between the application number and the optional parameter sequence, such that a delimitation of the dialing related subscriber number and the remote application related application identifier and the optional parameter sequence is introduced in the extended (subscriber) sequence. According to the embodiment illustrated in Fig. 3a, a hash-symbol "#" may be used as delimiter/separator, such that the final extended (subscriber) sequence being based on the examples given with reference to operations S110, S120 and S130 results to "0700123123#01003". Alternatively, when omitting the delimiter/separator the final extended (subscriber) sequence may become "070012312301003".

In an operation S150, the extended (subscriber) sequence is used in the manner of a conventional subscriber number (i.e. telephone number). That means, the extended (subscriber) sequence is provided to a dialing mechanism of the initiator terminal (i.e. terminal A) to be used in the kind of a conventional dialing code to dial to the addressee terminal (i.e. terminal B).

As explained in detail with reference to Fig. 1 the extended (subscriber) sequence is comprised of the field of call set-up request, which is dedicated to contain the called party sequence. In accordance with the call set-up request procedure, which is initiated by the dialing mechanism of the initiator terminal, this call set-up request is transmitted to the network knots of the corresponding public land mobile network (PLMN), in which the initiator terminal is subscribed. On the basis of this call set-up request, identification of the addressee terminal and routing to the addressee terminal are performed, respectively.

In an operation S190, the modified call set-up procedure according to an embodiment of the present invention is finished.

The operations S110 to S130 have been embodied as separate operations, each dedicated to a certain definition operation of a subsequence of the resulting extended (subscriber) sequence and performed stepwise. It is understood by those skilled in the art that this specific embodiment of the definition operations is just one of several equal embodiments. In a more user-friendly or sophisticated manner, at least some of the sequences required for remote initiation procedure according to the present invention may be predefined such that the definition operations are performed in a semi-automatic way. Moreover, the definition operations may be performed in an automatic way, for instance the required extended (subscriber) sequence may be completely predefined or in case the extended (subscriber) sequences may be combined automatically by a dedicated application operable with the initiator terminal. Consequently, the automatic remote initiation procedure may have to be only started by a user while the required definitions are predefined or automatically appended.

Referring to Fig. 3b, an operational sequence according to another embodiment of the invention is presented, which is to be carried out on terminal B, i.e. that terminal, which is addressee of the remote initiation of the procedure that has being described with respect to Fig. 3a according to an embodiment of the invention.

In an operation S200, the incoming call procedure on side of the addressee terminal (i.e. terminal B) is started; i.e. the initiation procedure of one or more applications in consequence of a remote initiation is started.

In an operation S210, the addressee terminal (i.e. terminal B) receives an incoming call request in consequence of the call set-up request described in detail with reference to Fig. 3a. The incoming call request procedure of which the incoming call request is part does not differ from an incoming call request procedure in consequence of a conventional call set-up request for establishing a voice communication connection. But content of the incoming call request can be different compared to the current embodiment.

In an operation S220, the incoming call request is analyzed. As aforementioned, the incoming call request comprises a field which is dedicated to contain the called party sequence which is in fact the sequence that is dialed by the initiator and originator (i.e. here the initiator terminal A), respectively, which causes the occurring of the incoming call request. According to the current described embodiment and with respect to the embodiment of Fig. 3a, the called party sequence field comprised in the incoming call request contains the sequence "0700123123#01003" or alternatively "070012312301003" (cf. operation S140 of Fig. 3a).

The addressee terminal knows about its "own" assigned subscriber number, which may simply be the telephone number assigned by the public land mobile network (PLMN) provider to the addressee terminal. For the way of illustration the subscriber number is "0700123123" with reference back to the example. On basis of this knowledge the decision can be issued, which results in an identification of a conventional subscriber number and an identification of an extended (subscriber) number in the gist of the present invention.

In an operation S230, in case of a successful analyze which indicates that a modified incoming call request according to an embodiment of the invention has been received by the addressee terminal (i.e. terminal B), the application identifier and if present the optional parameter sequence are extracted from the incoming call request and the called party sequence field contained therein. Basing on this knowledge of the subscriber number assigned to the addressee terminal, it is possible to reduce the extended subscriber sequence comprised in the called party sequence to the original subsequences, i.e. the subscriber number, the application identifier and the optional parameter sequence in case that this parameter sequence is included.

In accordance with the embodiment depicted in Fig. 3b the extracted application identifier is "01" and the extracted parameter sequence is "003", which correspond to the defined sequences shown illustratively in Fig. 3a.

In an operation S240, according to the extracted application identifier, the correspondingly associated remote application provided by and operable with the addressee terminal is identified. Analogously, the optional extracted parameter sequence which may represent a parameter identifier may be also employed for identifying a correspondingly associated information, data set, data record etc. provided by the addressee terminal and to be passed to the identified remote application for being processed thereby when the identified remote application is executed. Alternatively, the parameter sequence may be decoded to extract directly one or more parameters therefrom.

The association of the application identifier with executable remote applications may be obtained by analyzing and evaluating a table, an array, etc. which comprises predefined associations of identifiers and applications.

In an operation S250, the identified remote application is initiated and started on the addressee terminal (i.e. terminal B), respectively. In case of one or more optional parameters, which may be directly decoded from the optional parameter sequence or which may be obtained from an optional parameter identifier which identifies one or more parameters associated therewith, are passed on to the initiated remote application.

The initiation of the remote application in accordance with an embodiment of the present invention may be performed automatically or may performed alternatively on user confirmation, which comprises an inquiry for the request for remote initiation, such that the user may confirm the initiation. The inquiry procedure ensures that the user of the addressee terminal has still control over its terminal such that an unwanted operation of the terminal does not occur.

In an operation S290, the modified incoming call procedure on side of the addressee terminal is finished.

Conventionally, the number of the symbols, which allowed composition of a subscriber number and which were transmitted in the corresponding call set-up request, is limited to a maximum number. This length limitation of the subscriber number sequence relates also to the extended subscriber sequence that is used in the manner of a conventional subscriber number according to an embodiment of the invention. Due to this limitation, an additional procedure for data communication (e.g. for conveyance of one or more parameter sequences) between the initiator terminal and the addressee terminal shall be provided, where also bi-directional data communications is achievable. The additional procedure for communication shall be based on dial tone multiple frequency (DTMF) signaling which is supported by mobile communication enabled terminals of the state of the art.

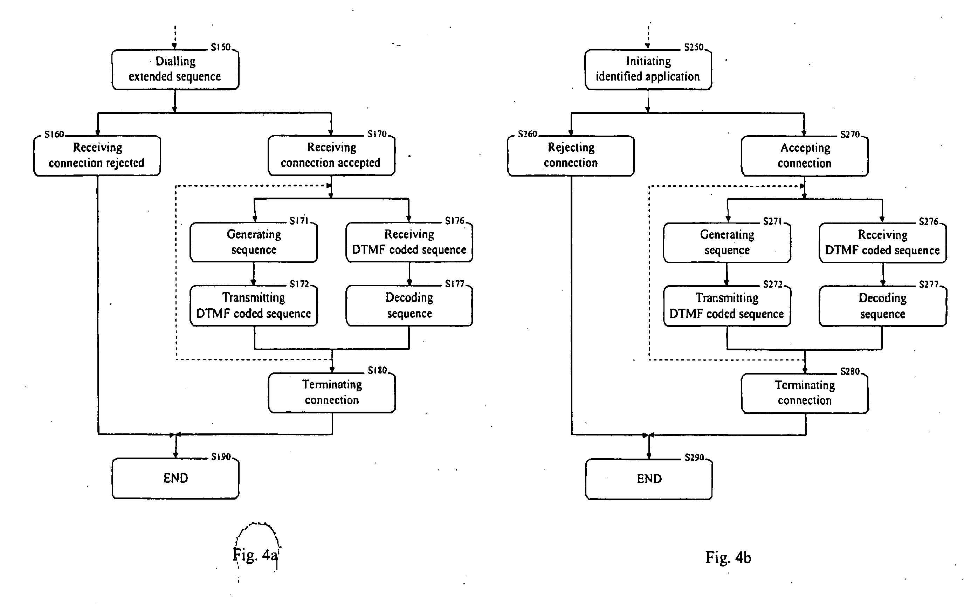

The following Figs. 4a and 4b provide flow charts which shall be assumed to be embedded into the flow charts of Figs. 3a and 3b, respectively. Referring to Fig 3a, Fig 4a should be included between operations S150 and S190, and correspondingly referring to Fig 3b, Fig 4b should be included between operations S250 and S290.

Referring to Fig. 4a, the operational sequence may be part of the operational sequence shown in Fig. 3a that illustrates an embodiment of the invention.

In the operation S150, the extended (subscriber) sequence is dialed in order to initiate the call set-up request procedure on side of the initiator terminal and the corresponding incoming call request procedure on side of the addressee terminal.

When the incoming call request is registered by the addressee terminal and the incoming call request has been analyzed resulting in an initiation of an indicated remote application the addressee terminal may either reply to the incoming call request with a rejection or with an acceptance of the call communication connection. Correspondingly, whether the decision is the rejection or the acceptance, the initiator terminal is informed thereabout by a respective response.

In an operation S160, the addressee terminal has issued a rejection of the establishment of the call communication connection and the initiator terminal has received the corresponding response comprising the information about the rejection. The remote initiation procedure according to an embodiment of the invention is to be finished by passing on to the operation S190.

In an operation S170, the addressee terminal has issued an acceptance of the establishment of the call communication connection and the initiator terminal has received the corresponding response comprising the information about the acceptance being followed by an establishment of the call communication connection.

The established communication connection may now be employed for further data communication, which is based on dial tone multiple frequency (DTMF) signaling and coding according to an embodiment of the invention.

In an operation S 171 and an operation S172, a data sequence is generated to be transmitted from the initiator terminal to the addressee terminal via the established communication connection. The sequence is coded on the basis of a set of symbols, the selection of which is subjected to the same limitation as described in conjunction with the coding of the application identifier and/or the parameter sequence. That means, the set of legal symbols may comprise for example "0" to "9", "#" and "*". The set of symbols is to be selected in such a way that a DTMF coding is applicable to the generated sequence. The required and correspondingly generated sequence is then transmitted as a corresponding DTMF coded sequence to addressee terminal B via the established connection thereto.

In an operation S176 and an operation S177, the initiator terminal is also able to receive one or more DTMF coded sequences, which are decoded in accordance with the DTMF coding.

The operations S171, S172, S176 and S177 may be repeated arbitrarily if required.

In an operation S180, the established call communication connection, via which DTMF coded data communications is applicable, is terminated. The termination may be performed either by the initiator terminal or by the addressee terminal.

In the operation S 180, the modified call set-up procedure according to an embodiment of the present invention is finished.

Referring to Fig. 4b, the operational sequence may be part of the operational sequence shown in Fig. 3b that illustrates an embodiment of the invention.

In the operation S250, the identified remote application is initiated and started on the addressee terminal, respectively.

As aforementioned, the addressee terminal may decide whether to reject or to accept the establishment of the communication connection on receiving the incoming call request.

In an operation S260, the addressee terminal issues a rejection of the establishment of the call communication connection. A respective response is generated by the PLMN, to which the rejection is indicated, such that the initiator terminal is correspondingly informed about the rejection. The described procedure according to an embodiment of the invention is to be finished by passing on to the operation S290.

In an operation S270, the addressee terminal issues an acceptance of the establishment of the call communication connection and the communication connection is then accordingly established.

In operations S271 and S272, a data sequence is generated to be transmitted from the addressee terminal to the initiator terminal via the established communication connection. The generated sequence to be transmitted is to be DTMF coded before transmission. The limitation about the generated sequence described with respect to operations S171 and S172 are applicable analogously. Next, the DTMF coded sequence is transmitted to the initiator terminal.

In an operation S276, the addressee terminal receives a DTMF coded sequence from the initiator terminal via the established communication connection. In an operation S277 the DTMF coded sequence is decoded in accordance with the DTMF coding and the resulting sequence may be passed on to the initiated/started remote application as a parameter sequence. Alternatively, the decoded sequence may represent a parameter identifier associated with one or more predefined parameters comprising information, data, set of data, data record etc which in turn may be passed after resolving to the initiated/started remote application.

In an operation S280, the established call communication connection, via which DTMF coded data communications is applicable, is terminated. The termination may be performed either by the initiator terminal or by the addressee terminal.

In the operation S290, the modified incoming call procedure on side of the addressee terminal B is finished.

### A more specific example: SMS replacement

The concept and application of the present invention shall be enlightened in the following on the basis of a specific example and embodiment, which allows substitution of a short message communicated via the short message service.

For the way of illustration, a user A may indicate to a second user, that an email is present for the user B. Both the user A and the user B are assumed to employ mobile phone A and mobile phone B for communicating with each other, respectively. Conventionally, in such a case an informative short message comprising an indicative massage may be edited on the mobile phone A by the user A and transmitted to the mobile phone B of the user B via the short message service.

In conjunction with an embodiment of the present invention, a corresponding informative message may be transmitted omitting the short message service. The user A may define the remote initiation of a viewer application to which an appropriate parameter sequence is passed on. With reference to Figs. 3a and 3b, the illustrative application identifier (app ID) "01" may be associated with the appropriate viewer application executable on the mobile terminal B of the user B. The parameter sequence "003" may be a parameter identifier which is associated in this embodiment with a text sequence: "You received a new email."

That means, in case the user A dials the extended (subscriber) sequence "070012312301003", where "0700123123" shall be the subscriber number of the mobile phone B, the addressee mobile terminal B receives an incoming call request with the extended (subscriber) sequence and initiates the viewer application, with which the application identifier is associated. Additionally, the parameter sequence representing a parameter identifier is resolved to the text sequence, which is passed on to the viewer application at initiation or after initiation thereof. As a result, on the mobile phone B the informative message " You received a new email." is displayed by the viewer application.

Since an attempt to establish a call communication connection is not charged by the PLMN operators, and in accordance with the current example, further communication is not required such that the incoming call request can be rejected by the mobile phone B, the conveyance of information basing on this embodiment of the invention is free of charge. This is in contrast to the charging of short messages via the short message service.

### A more common example: Client/server application

A more sophisticated application of the present invention can be illustrated in conjunction with client/server applications. Typically, a server operating a server application and at least a client operating a client application, which is able to access the server application and inter-work therewith, form typically a client/server environment. More typically, the server is normally operated in such a way that the server application performed thereon is always accessible by the client. Non-mobile server systems connected to fixed communication networks may fulfil the required accessibility without any constraints.

But when carrying out server applications on mobile terminals such as mobile phones, the continuous operation of server applications is neither desired nor realizable when considering for example power consumption. The present invention allows for overcoming this problem. The remote initiation of one or more remote applications allows initiation of exactly that server application which is desired to be accessible to set-up a client/server application.

With reference to Figs. 3a and 3b, respectively, the selected application identifier may be associated with a required server application and the parameter sequence may be employed to code an internet protocol (IP) number of the initiator terminal A, which shall be appreciated as an IP number assigned dynamically. After initiation of the defined server application which is supplied with the IP number, i.e. the parameter sequence coding the IP number, the addressee/remote terminal operating now the server application may establish an IP-based communication connection to initiator terminal (now identified by its IP number) to realize the client/server communication. The IP-based communication may be operated via a packet-oriented data communication connection such as GPRS (general packet radio service)

It is to be noted that the user (the originator) doesn't have to know end users IP-address, because the IP -address can be sent via called party number (as only the phone number is needed) or with a DTMF update. After that, end user can connect to address and port (port can be specified with called party number). Also, end user does not have to have GPRS connection up and running, because it can be established via phone call (which saves battery power).

By using the present invention e.g. a GPRS- connection between telephones can be established without knowing an IP-address. The phones require client/server and end applications. The client dials the extended called party number and sends the number sequence to the network and waits for the response from the server. The sequence need to have a starting point, an end point, separators (i.e. not a number a user can dial for setting up a telephone connection: 1234567890 numbers), an application ID (e.g. Symbian world application unique user identification (UID), which are reserved from Symbian) and optional parameters like IP-address. The server knows from the initialization sequence, that this is not a call because called party number has a sequence that indicates this is a client/server "call". The server starts to look up for an end application by the application ID. The server finds and sends information from called party number (e.g. IP-address). Finally the end application can connect to that IP-address, and an Internet connection is started.

There are at least two different ways to initialize client/server session between phones.
1. The called party number has an initialization sequence at the end of called number. It means that called party does not have to answer the call, because it gets all information, which is needed to establish client server session. However, the length of called party number is limited. The server can accept and discard session by using cause code. It means that all data is transferred without establishing a phone call.
2. The called party number has a limited initialization sequence at the end of number. The initialization sequence is used to start a server, which can receive DTMF updates ("call is established"). The DTMF update indicates to the server which end application is to be started.

This method can be used for different applications, not only for establishing network connections. Called party number can change behavior of the called party, like e.g. phone profiles.

### Implementation:

The realization of the invention has primarily been presented in view of operational sequences and flow charts. It shall be understood that the description in form of flow charts and operations is a common technique for denotation of procedures, which can be realized by various components performing one or more operations of the procedure. The depicted operations may be realized and implemented as code sections containing instructions, which allow achievement of the operational results as described in detail.

That means with reference to the initiator terminal, a dialing mechanism which is supplied with the extended subscriber sequence, where the extended subscriber sequence is obtained as a predefined extended subscriber sequence from a dedicated storage or is formed from one or more predefined and/or inputted sub-sequences. The forming and/or inputting may be supported and controlled by a user interface component that is adapted receiving user input operable by a keypad of the initiator terminal. A communication interface is finally required to convey the call set-up procedure to the PLMN, to which the initiator terminal is subscribed.

That means with reference to the addressee terminal that a communication interface is adapted to receive the incoming call request from the PLMN to which the addressee terminal is subscribed. A suitable remote initiation component may comprise one or more sub-components which are adapted to analyze the called party sequence, extracting the coded application identifier and optional parameter sequence, identifying the associated application and, if required, the associated parameter and starting/initiating the application with or without parameter passed on additionally.

While a selection of embodiment of the invention have been disclosed in detail, it should be understood by those skilled in the art that various other modifications may be made to the illustrated embodiments without departing from the scope of the present invention as defined in the appended claims.

## Claims

1. Method of requesting remote initiation of at least one application comprising:
- defining (S110) a first sequence at an initiator terminal device (A), wherein said first sequence identifying a subscriber of a remote terminal device (B);
- defining (S 120) at least one second sequence at said initiator terminal device (A); wherein said at least one second sequence corresponds to an application identifier which is associated with at least one remote application executable at said remote terminal device (B) and allows for remote initiation thereof; and
- transmitting (S 150) a call set-up request from said initiator terminal device (A) to a telephone network by dialing (S150) said first sequence and said at least one second sequence, wherein said call set-up request addresses said remote terminal derive (B),
wherein said call set-up request comprises said first sequence and said at least one second sequence.

2. Method according to claim 1, wherein said first sequence corresponds to a subscriber number of said remote terminal device (B) and said first sequence and said at least one second sequence are defined to instruct said remote terminal device (B) to initiate said at least one remote application.

3. Method according to claim 1, wherein said first sequence and said at least one second sequence form an extended subscriber sequence.

4. Method according to claim 1, further comprising:
- receiving (S 160, S 170) a response informing about acceptance or rejection of a call communication connection of said remote terminal device (B) after transmission of said call set-up request thereof.

5. Method according to claim 1, wherein said remote initiation of said at least one remote application allows for establishing a client/server environment.

6. Method according to claim 1, wherein said at least one second sequence further comprises a parameter sequence for said at least one remote application.

7. Method according to claim 3; wherein said extended subscriber sequence additionally comprises at least one separator, which delimits said first sequence and said at least one second sequence from each other.

8. Method according to claim 1, wherein said first sequence corresponds to a telephone number.

9. Method according to claim 1, further comprising:
- establishing (S170) a communication connection in consequence to said transmitting of said call set-up request; and
- transceiving (S171 to S177) DTMF-coded sequences to allow data communication with said remote terminal device (B).

10. Method of executing remote initiation of at least one application, comprising:
- receiving (S210) an incoming call set-up request at a remote terminal device (B), wherein said incoming call set-up request is received from a telephone network and effected by an initiator terminal device (A) and comprises a called party sequence; wherein said called party sequence comprises a first sequence and at least one second sequence, wherein said first sequence identifies a subscriber of said remote terminal device (B);
- identifying (S240) at least one application executable at said remote terminal device (B) in accordance with said at least one second sequence; and
- initiating (S250) said at least one identified application.

11. Method according to claim 10, further comprising:
- examining (S220) said called party sequence to determine whether said called party sequence corresponds to an extended subscriber sequence formed of a subscriber number of said remote terminal device (B) and said at least one second sequence; and
- extracting (S230) said at least one second sequence from said called party sequence.

12. Method according to claim 10, further comprising:
- transmitting (S260, S270) a response from said remote terminal device (B) to said telephone network, wherein said response informs said initiator terminal device (A) about an acceptance or rejection of a call communication connection after reception of said incoming call request at said remote terminal device (B).

13. Method according to claim 10, wherein said initiation (S250) of said at least one identified application allows for establishing a client/server environment with said initiator terminal device (A).

14. Method according to claim 10, wherein said called party sequence comprises a subscriber number and said at least one second sequence corresponds to an application identifier which is associated with said at least one application.

15. Method according to claim 10, wherein said at least one second sequences further comprises a parameter sequence for said at least one application.

16. Method according to claim 12, further comprising:
- establishing (S270) a communication connection in consequence to said receiving of said indication; and
- transceiving (S271 to S277) DTMF-coded sequences to allow data communication with said initiator terminal device (A).

17. Computer program product, comprising program code sections for carrying out the steps of a method according to anyone of claims 1 to 9, when said program code sections are run on a computer, a terminal, a network device, a mobile terminal, a mobile communication enabled terminal or an application specific integrated circuit associated with the initiator terminal device.

18. Computer program product, comprising program code sections for carrying out the steps of a method according to anyone of claims 10 to 16, when said program code sections are run on a computer, a terminal, a network device, a mobile terminal, a mobile communication enabled terminal, or an application specific integrated circuit associated with the remote terminal device.

19. Terminal device capable of mobile communications, comprising:
- a dialing mechanism, which is adapted to generate a call set-up request, which comprises a first sequence and at least one second sequence, wherein said first sequence is provided at said terminal device, wherein said first sequence identifies a subscriber of a remote terminal device (B),
wherein said at least one second sequence is provided at said terminal device (A); wherein said at least one second sequence corresponds to an application identifier which is associated with at least one remote application executable at said remote terminal device (B) and allows for remote initiation thereof; and
- a communication interface, which is adapted to transmit the call set-up request to said remote terminal derive (B) via a telephone network.

20. Terminal device according claim 19, further comprising:
- a set of pre-defined application identifiers each being associated with one application executable at said remote terminal device (B), wherein said set of pre-defined application identifiers is provided for selecting thereof.

21. Terminal device according claim 19, further comprising:
- a subscriber number directory for selection thereof.

22. Terminal device capable of mobile communications, comprising:
- a communication interface, which is adapted to receive an incoming call set-up request, which comprises a called party sequence, wherein said incoming call set-up request is received from a telephone network and effected by an initiator terminal device (A), wherein said called party sequence comprises a first sequence and at least one second sequence, wherein said first sequence identifies a subscriber of said terminal device (B); and
- an identification component, which is adapted to identify at least one application executable at said terminal device (B) in accordance with said at least one second sequence,
said terminal device (B) being adapted to subsequently initiate said at least one identified application is initiated at.

23. Terminal device according to claim 22, further comprising an examination component for examining said called party sequence to determine whether said called party sequence comprises among others said at least one second sequence.

24. Terminal device according to claim 23, comprising an extraction component, which is adapted to extract said at least one second sequence from said called party sequence in case said called party sequence comprises said at least one second sequence.

25. Terminal device according to claim 22, wherein said extraction component is further adapted to extract a parameter sequence further comprised in said at least one second sequences, wherein said parameter sequence is dedicated for said at least one identified application.

26. Terminal device according to claim 22, further comprising an initiation component, which is adapted to initiate said at least one identified application.

27. System, comprising an initiator terminal device (A) and a remote terminal device (B),
wherein said initiator terminal device (A) is a terminal device according to anyone of the claims 19 to 21,
wherein said remote terminal device (B) is a terminal device according to anyone of the claims 22 to 26.

## Patentansprüche

1. Verfahren zum Anfordern einer Ferninitiierung mindestens einer Anwendung, umfassend:
- Festlegen (S110) einer ersten Sequenz auf einer Initiator-Endvorrichtung (A), wobei die erste Sequenz einen Teilnehmer einer Fern-Endvorrichtung (B) identifiziert;
- Festlegen (S 120) mindestens einer zweiten Sequenz auf der Initiator-Endvorrichtung (A), wobei die mindestens eine zweite Sequenz einer Anwendungskennung entspricht, die mindestens einer Fern-Anwendung zugeordnet ist, die auf der Fern-Endvorrichtung (B) ausführbar ist, und deren Ferninitiierung ermöglicht; und
- Übermitteln (S 150) einer Anrufaufbau-Anfrage von der Initiator-Endvorrichtung (A) an ein Telefonnetzwerk durch Wählen (S150) der ersten Sequenz und der mindestens einen zweiten Sequenz, wobei die Anrufaufbau-Anfrage die Fern-Endvorrichtung (B) adressiert,
wobei die Anrufaufbau-Anfrage die erste Sequenz und die mindestens eine zweite Sequenz umfasst.

2. Verfahren gemäß Anspruch 1, wobei der erste Sequenz einer Teilnehmernummer der Fern-Endvorrichtung (B) entspricht und die erste Sequenz und die mindestens eine zweite Sequenz festgelegt sind, um die Fern-Endvorrichtung (B) anzuweisen, die mindestens eine Anwendung zu initiieren.

3. Verfahren gemäß Anspruch 1, wobei die erste Sequenz und die mindestens eine zweite Sequenz eine erweiterte Teilnehmersequenz bilden.

4. Verfahren gemäß Anspruch 1, ferner umfassend:
- Empfangen (S 160, S 170) einer Antwort, die über die Annahme oder Abweisung einer Anrufkommunikationsverbindung der Fern-Endvorrichtung (B) informiert, nach Übermittlung der Anrufaufbau-Anfrage.

5. Verfahren gemäß Anspruch 1, wobei die Fern-Initiierung der mindestens einen Fern-Anwendung einen Aufbau einer Client/Server-Umgebung ermöglicht.

6. Verfahren gemäß Anspruch 1, wobei die mindestens eine zweite Sequenz ferner eine Parameter-Sequenz für die mindestens eine Fern-Anwendung umfasst.

7. Verfahren gemäß Anspruch 3, wobei die erweiterte Teilnehmersequenz weiterhin mindestens ein Trennsymbol umfasst, das die erste Sequenz und die mindestens eine zweite Sequenz voneinander abgrenzt.

8. Verfahren gemäß Anspruch 1, wobei die erste Sequenz einer Telefonnummer entspricht.

9. Verfahren gemäß Anspruch 1, ferner umfassend:
- Aufbau (S 170) einer Kommunikationsverbindung als Folge von der Übermittlung der Anrufaufbau-Anfrage; und
- Sende/Empfangen (S 171 bis S 177) von Mehrfrequenzwahlverfahren-kodierten Sequenzen, um eine Datenkommunikation mit der Fern-Endvorrichtung (B) zu ermöglichen.

10. Verfahren zum Ausführen einer Ferninitiierung mindestens einer Anwendung, umfassend:
- Empfangen (S210) einer ankommenden Anrufaufbau-Anfrage an einer Fern-Endvorrichtung (B), wobei die ankommende Anrufaufbau-Anfrage von einem Telefonnetzwerk empfangen wird und durch eine Initiator-Endvorrichtung (A) bewirkt wird und eine Sequenz einer angerufenen Partei umfasst, wobei die Sequenz der angerufenen Partei eine erste Sequenz und mindestens eine zweite Sequenz umfasst, wobei die erste Sequenz einen Teilnehmer der Fern-Endvorrichtung (B) identifiziert;
- Identifizieren (S240) mindestens einer auf der Fern-Endvorrichtung (B) ausführbaren Anwendung gemäß der mindestens einen zweiten Sequenz; und
- Initiieren (S250) der mindestens einen identifizierten Anwendung.

11. Verfahren gemäß Anspruch 10, ferner umfassend:
- Untersuchen (S220) der Sequenz der angerufenen Partei, um festzustellen, ob die Sequenz der angerufenen Partei einer erweiterten Teilnehmersequenz einspricht, die aus einer Teilnehmernummer der Fern-Endvorrichtung (B) und der mindestens einen zweiten Sequenz gebildet ist; und
- Extrahieren (S230) der mindestens einen zweiten Sequenz aus der Sequenz der angerufenen Partei.

12. Verfahren gemäß Anspruch 10, ferner umfassend:
- Übermitteln (S260, S270) einer Antwort von der Fern-Endvorrichtung (B) an das Telefonnetzwerk, wobei die Antwort die Initiator-Endvorrichtung (A) über eine Annahme oder Abweisung einer Anrufkommunikationsverbindung nach Empfang der ankommenden Anrufanfrage an der Fern-Endvorrichtung (B) informiert.

13. Verfahren gemäß Anspruch 10, wobei die Initiierung (S250) der mindestens einen identifizierten Anwendung einen Aufbau einer Client/Server-Umgebung mit der Initiator-Endvorrichtung (A) ermöglicht.

14. Verfahren gemäß Anspruch 10, wobei die Sequenz der angerufenen Partei eine Teilnehmernummer umfasst und die mindestens eine zweite Sequenz einer Anwendungskennung entspricht, die der mindestens einen Anwendung zugeordnet ist.

15. Verfahren gemäß Anspruch 10, wobei die mindestens eine zweite Sequenz ferner eine Parametersequenz umfasst, die der mindestens einen Anwendung zugeordnet ist.

16. Verfahren gemäß Anspruch 12, ferner umfassend:
- Aufbauen (S270) einer Kommunikationsverbindung als Folge von Empfangen der Anzeige; und
- Sende/Empfangen (S271 bis S277) von Mehrfrequenzwahlverfahren-kodierten Sequenzen, um eine Datenkommunikation mit der Initiator-Endvorrichtung (A) zu ermöglichen.

17. Computerprogrammprodukt, das Computerprogrammabschnitte zum Ausführen der Schritte eines Verfahrens gemäß einem der Ansprüche 1 bis 9 umfasst, wenn die Computerprogrammabschnitte auf einem Computer, einer Endvorrichtung, einer Netzwerkvorrichtung, einer Mobilendvorrichtung, einer zur Mobilkommunikation befähigten Endvorrichtung oder einem anwendungsspezifischen integriertem Schaltkreis, der der Initiator-Endvorrichtung zugeordnet ist, ausgeführt wird.

18. Computerprogrammprodukt, das Computerprogrammabschnitte zum Ausführen der Schritte eines Verfahrens gemäß einem der Ansprüche 10 bis 16 umfasst, wenn die Computerprogrammabschnitte auf einem Computer, einer Endvorrichtung, einer Netzwerkvorrichtung, einer Mobilendvorrichtung, einer zur Mobilkommunikation befähigten Endvorrichtung oder einem anwendungsspezifischen integrierten Schaltkreis, der der Fern-Endvorrichtung zugeordnet ist, ausgeführt wird.

19. Endvorrichtung geeignet für Mobilkommunikation, umfassend
- ein Wählmechanismus, der angepasst ist, eine Anrufaufbau-Anfrage zu erzeugen, die eine erste Sequenz und mindestens eine zweite Sequenz umfasst, wobei die erste Sequenz auf der Endvorrichtung bereitgestellt ist, wobei die erste Sequenz einen Teilnehmer einer Fern-Endvorrichtung (B) identifiziert,
wobei die mindestens eine zweite Sequenz auf der Endvorrichtung (A) bereitgestellt ist, wobei die mindestens eine zweite Sequenz einer Anwendungskennung entspricht, die mindestens einer Anwendung zugeordnet ist, die auf der Fern-Endvorrichtung (B) ausführbar ist, und deren Ferninitiierung ermöglicht; und
- eine Kommunikationsschnittstelle, die angepasst ist, die Anrufaufbau-Anfrage an die Fern-Endvorrichtung (B) über ein Telefonnetzwerk zu übermitteln.

20. Endvorrichtung gemäß Anspruch 19, ferner umfassend:
- einen Satz von vordefinierten Anwendungskennungen, die jede einer Anwendung zugeordnet ist, die auf der Fern-Endvorrichtung (B) ausführbar ist, wobei der Satz von vordefinierten Anwendungskennungen zur Auswahl daraus bereitgestellt ist.

21. Endvorrichtung gemäß Anspruch 19, ferner umfassend:
- ein Teilnehmernummer-Verzeichnis zur Auswahl daraus.

22. Endvorrichtung geeignet für Mobilkommunikation, umfassend:
- eine Kommunikationsschnittstelle, die angepasst ist, eine ankommende Anrufaufbau-Anfrage zu empfangen, die eine Sequenz einer angerufenen Partei umfasst, wobei die ankommende Anrufaufbau-Anfrage von einem Telefonnetzwerk empfangen und durch eine Initiator-Endvorrichtung (A) bewirkt wird, wobei die Sequenz der angerufenen Partei eine erste Sequenz und mindestens eine zweite Sequenz umfasst, wobei die erste Sequenz einen Teilnehmer der Endvorrichtung (B) identifiziert; und
- eine Identifikationskomponente, die angepasst ist, mindestens eine Anwendung zu identifizieren, die auf der Endvorrichtung (B) gemäß der mindestens einen zweiten Sequenz ausführbar ist,
wobei die Endvorrichtung (B) angepasst ist, nachfolgend die mindestens eine identifizierte Anwendung zu initiieren.

23. Endvorrichtung gemäß Anspruch 22, ferner umfassend eine Untersuchungskomponente zum Untersuchen der Sequenz der angerufenen Partei, um festzustellen, ob die Sequenz der angerufenen Partei unter anderem die mindestens eine zweite Sequenz umfasst.

24. Endvorrichtung gemäß Anspruch 23, umfassend eine Extraktionskomponente, die angepasst ist, die mindestens eine zweite Sequenz aus der Sequenz der angerufenen Partei zu extrahieren, im Fall dass die der Sequenz der angerufenen Partei die mindestens zweite Sequenz umfasst.

25. Endvorrichtung gemäß Anspruch 22, wobei die Extraktionskomponente ferner angepasst ist, eine Parametersequenz zu extrahieren, die ferner in der mindestens einen zweiten Sequenz umfasst ist, wobei die Parametersequenz für die mindestens eine identifizierte Anwendung bestimmt ist.

26. Endvorrichtung gemäß Anspruch 22, ferner umfassend eine Initiierungskomponente, die angepasst ist, die mindestens eine identifizierte Anwendung zu initiieren.

27. System, umfassend eine Initiator-Endvorrichtung (A) und eine Fern-Endvorrichtung (B), wobei die Initiator-Endvorrichtung (A) eine Endvorrichtung gemäß irgendeinem der Ansprüche 19 bis 21 ist,
wobei die Fern-Endvorrichtung (B) eine Endvorrichtung gemäß irgendeinem der Ansprüche 22 bis 26 ist.

## Revendications

1. Procédé de demande de lancement à distance d'au moins une application, comprenant les étapes consistant à :
- définir (S110) une première séquence à un dispositif de terminal de lancement (A), dans lequel ladite première séquence identifie un abonné d'un dispositif de terminal à distance (B) ;
- définir (S 120) au moins une seconde séquence audit dispositif de terminal de lancement (A) ; dans lequel ladite au moins une seconde séquence correspond à un identifiant d'application qui est associé à au moins une application à distance exécutable au niveau dudit dispositif de terminal à distance (B) et permet le lancement à distance de celle-ci ; et
- transmettre (S 150) une demande d'établissement d'appel dudit dispositif de terminal de lancement (A) à un réseau téléphonique en numérotant (S150) ladite première séquence et ladite au moins une seconde séquence, dans lequel ladite demande d'établissement d'appel adresse ledit dispositif de terminal à distance (B),
dans lequel ladite demande d'établissement d'appel comprend ladite première séquence et ladite au moins une seconde séquence.

2. Procédé selon la revendication 1, dans lequel ladite première séquence correspond à un numéro d'abonné dudit dispositif de terminal à distance (B) et ladite première séquence et ladite au moins une seconde séquence sont définies pour ordonner audit dispositif de terminal à distance (B) de lancer ladite au moins une application à distance.

3. Procédé selon la revendication 1, dans lequel ladite première séquence et ladite au moins une seconde séquence forment une séquence étendue d'abonné.

4. Procédé selon la revendication 1, comprenant en outre l'étape consistant à :
- recevoir (S 160, S 170) une réponse informant de l'acceptation ou du rejet d'une connexion de communication d'appel dudit dispositif de terminal à distance (B) après la transmission de ladite demande d'établissement d'appel de celui-ci.

5. Procédé selon la revendication 1, dans lequel ledit lancement à distance de ladite au moins une application à distance permet l'établissement d'un environnement client/serveur.

6. Procédé selon la revendication 1, dans lequel ladite au moins une seconde séquence comprend en outre une séquence de paramètres pour ladite au moins une application à distance.

7. Procédé selon la revendication 3, dans lequel ladite séquence étendue d'abonné comprend en outre au moins un séparateur, qui délimite ladite première séquence et ladite au moins une seconde séquence l'une de l'autre.

8. Procédé selon la revendication 1, dans lequel ladite première séquence correspond à un numéro téléphonique.

9. Procédé selon la revendication 1, comprenant en outre les étapes consistant à :
- établir (S 170) une connexion de communication en conséquence de ladite étape consistant à transmettre ladite demande d'établissement d'appel ; et
- émettre et recevoir (S171 à S177) des séquences de code DTMF pour permettre une communication de données avec ledit dispositif de terminal à distance (B).

10. Procédé d'exécution de lancement à distance d'au moins une application, comprenant les étapes consistant à :
- recevoir (S210) une demande d'établissement d'appel entrant à un dispositif de terminal à distance (B), dans lequel ladite demande d'établissement d'appel entrant est reçue d'un réseau téléphonique et effectuée par un dispositif de terminal de lancement (A) et comprend une séquence de partie appelée ; dans lequel ladite séquence de partie appelée comprend une première séquence et au moins une seconde séquence, dans lequel ladite première séquence identifie un abonné dudit dispositif de terminal à distance (B) ;
- identifier (S240) au moins une application exécutable audit dispositif de terminal à distance (B) en fonction de ladite au moins une seconde séquence ; et
- lancer (S250) ladite au moins une application identifiée.

11. Procédé selon la revendication 10, comprenant en outre les étapes consistant à :
- examiner (S220) ladite séquence de partie appelée pour déterminer si ladite séquence de partie appelée correspond à une séquence étendue d'abonné formée d'un numéro d'abonné dudit dispositif de terminal à distance (B) et de ladite au moins une seconde séquence ; et
- extraire (S230) ladite au moins une seconde séquence de ladite séquence de partie appelée.

12. Procédé selon la revendication 10, comprenant en outre les étapes consistant à :
- transmettre (S260, S270) une réponse dudit dispositif de terminal à distance (B) audit réseau téléphonique, dans lequel ladite réponse informe ledit dispositif de terminal de lancement (A) d'une acceptation ou d'un rejet d'une connexion de communication d'appel après la réception de ladite demande d'appel entrant audit dispositif de terminal à distance (B).

13. Procédé selon la revendication 10, dans lequel ledit lancement (S250) de ladite au moins une application identifiée permet l'établissement d'un environnement client/serveur avec ledit dispositif de terminal de lancement (A).

14. Procédé selon la revendication 10, dans lequel ladite séquence de partie appelée comprend un numéro d'abonné et ladite au moins une seconde séquence correspond à un identifiant d'application qui est associé à ladite au moins une application.

15. Procédé selon la revendication 10, dans lequel ladite au moins une seconde séquence comprend en outre une séquence de paramètres pour ladite au moins une application.

16. Procédé selon la revendication 12, comprenant en outre les étapes consistant à :
- établir (S270) une connexion de communication en conséquence de ladite réception de ladite indication ; et
- émettre et recevoir (S271 à S277) des séquences de code DTMF pour permettre une communication de données avec ledit dispositif de terminal de lancement (A).

17. Produit de programme informatique, comprenant des sections de code de programme pour effectuer les étapes d'un procédé selon l'une quelconque des revendications 1 à 9, lorsque lesdites sections de code de programme sont exécutées sur un ordinateur, un terminal, un dispositif de réseau, un terminal mobile, un terminal permettant des communications mobiles ou un circuit intégré spécifique à une application, associé au dispositif de terminal de lancement.

18. Produit de programme informatique, comprenant des sections de code de programme pour effectuer les étapes d'un procédé selon l'une quelconque des revendications 10 à 16, lorsque lesdites sections de code de programme sont exécutées sur un ordinateur, un terminal, un dispositif de réseau, un terminal mobile, un terminal permettant des communications mobiles ou un circuit intégré spécifique à une application, associé au dispositif de terminal de lancement.

19. Dispositif de terminal capable de communications mobiles, comprenant :
- un mécanisme de numérotation, qui est apte à générer une demande d'établissement d'appel, qui comprend une première séquence et au moins une seconde séquence, dans lequel ladite première séquence est fournie audit dispositif de terminal, dans lequel ladite première séquence identifie un abonné d'un dispositif de terminal à distance (B),
dans lequel ladite au moins une seconde séquence est fournie audit dispositif de terminal (A) ; dans lequel ladite au moins une seconde séquence correspond à un identifiant d'application qui est associé à au moins une application à distance exécutable audit dispositif de terminal à distance (B) et permet le lancement à distance de celle-ci ; et
- une interface de communication qui est adapté à transmettre la demande d'établissement d'appel audit dispositif de terminal à distance (B) par le biais d'un réseau téléphonique.

20. Dispositif de terminal selon la revendication 19, comprenant en outre :
- un ensemble d'identifiants prédéfinis d'applications chacun étant associé à une application exécutable audit dispositif de terminal à distance (B),
dans lequel ledit ensemble d'identifiants prédéfinis d'applications est fourni pour la sélection de celles-ci.

21. Dispositif de terminal selon la revendication 19, comprenant en outre :
- un annuaire de numéros d'abonnés pour la sélection de ceux-ci.

22. Dispositif de terminal capable de communications mobiles, comprenant :
- une interface de communication, qui est adapté à recevoir une demande d'établissement d'appel entrant, qui comprend une séquence de partie appelée, dans lequel ladite demande d'établissement d'appel entrant est reçue d'un réseau téléphonique et effectuée par un dispositif de terminal de lancement (A), dans lequel ladite séquence de partie appelée comprend une première séquence et au moins une seconde séquence ; dans lequel ladite première séquence identifie un abonné dudit dispositif de terminal (B) ; et
- un composant d'identification qui est adapté à identifier au moins une application exécutable audit dispositif de terminal (B) en fonction de ladite au moins une seconde séquence,
ledit dispositif de terminal (B) étant adapté à lancer ensuite ladite au moins une application identifiée.

23. Dispositif de terminal selon la revendication 22, comprenant en outre un composant d'examen pour examiner ladite séquence de partie appelée pour déterminer si ladite séquence de partie appelée comprend entre autres ladite au moins une seconde séquence.

24. Dispositif de terminal selon la revendication 23, comprenant un composant d'extraction qui est adapté à extraire ladite au moins une seconde séquence de ladite séquence de partie appelée dans le cas où ladite séquence de partie appelée comprend ladite au moins une seconde séquence.

25. Dispositif de terminal selon la revendication 22, dans lequel ledit composant d'extraction est en outre adapté à extraire une séquence de paramètres comprise en outre dans ladite au moins une seconde séquence, dans lequel ladite séquence de paramètres est dédiée à ladite au moins une application identifiée.

26. Dispositif de terminal selon la revendication 22, comprenant en outre un composant de lancement qui est adapté à lancer ladite au moins une application identifiée.

27. Système comprenant un dispositif de terminal de lancement (A) et un dispositif de terminal à distance (B), dans lequel ledit dispositif de terminal de lancement (A) est un dispositif de terminal selon l'une quelconque des revendications 19 à 21,
dans lequel ledit dispositif de terminal à distance (B) est un dispositif de terminal selon l'une quelconque des revendications 22 à 26.
